# EUROPEAN PATENT SPECIFICATION

(11) **EP 3 178 742 B1**
(45) Date of publication and mention of the grant of the patent: **17.04.2019**
(21) Application number: 15198410.1
(22) Date of filing: 08.12.2015
(51) Int. Cl.: B65B 25/00, B65B 35/16, B65G 47/90, B65B 5/10

(54) **A PICK AND PLACE GRIPPER DEVICE FOR PICKING UP AND RE-POSITIONING A DEFORMABLE FOOD ITEM AND A METHOD OF DOING THE SAME**
AUFNAHME- UND ABSETZGREIFERVORRICHTUNG ZUM AUFNEHMEN UND NEUPOSITIONIEREN EINES VERFORMBAREN LEBENSMITTELPOSTENS SOWIE VERFAHREN ZUR DURCHFÜHRUNG DAFÜR
DISPOSITIF DE PRÉHENSION PRENEUR-PLACEUR DESTINÉ À CAPTER ET À REPOSITIONNER UN ARTICLE ALIMENTAIRE DÉFORMABLE ET PROCÉDÉ DE FABRICATION ASSOCIÉ

(43) Date of publication of application: 14.06.2017
(73) Proprietor: Marel A/S, 8200 Aarhus N (DK)
(72) Inventor: PEDERSEN, Bjørn Heide, 8940 Randers (DK); HUNDTOFTE, Niels, 8250 Egå (DK); DALGAARD, Jens Kongensholm, 8362 Hørning (DK)
(74) Representative: Patentgruppen A/S

(56) References cited:
- EP-A1- 1 792 831
- US-A- 4 677 810
- US-A- 5 018 338
- US-A1- 2006 182 603

## Description

### FIELD OF THE INVENTION

The present invention relates to a pick and place gripper device and a method for picking up and re-positioning a deformable food item carried by a support surface.

### BACKGROUND OF THE INVENTION

EP1792831 discloses a method for packaging of food products, in which at least two products are to be packaged at the same portion carrier, where a gripping means comprising a first and a second jaws each having an outer side and a gripping side, where the gripping sides are facing each other. The first and the second jaws are configured to be moveable between at least two positions, one holding position and one open position. The gripping means further comprises ejector means arranged intermediate the gripping sides of the first and the second jaws, where the ejector means is moveable between a first retracted holding position and a second eject position. The operation of the gripping means is following: A food product is picked up by the first and the second jaws. The releasing of the food product into a tray in a space between e.g. two food products is performed by moving the gripping means down towards the bottom of the tray, i.e. the releasing position, in this case between the two food products. When releasing the food product from theq gripping means into the space between the two food products the jaws move to the open position and the ejector means pushes the food product that is resting on the gripping sides of the gripping means and into the space between the two food products.

The step of releasing the food product, e.g. in the example above, can cause a disturbance in the neighboring food products via first and the second jaws that simply might push them in opposite directions when creating a space for the food product in the gripper, which can lead to a movement of the tray and thus a failure in the packaging.

Also, different friction of the gripping sides of the first and second jaws can cause imbalance in the food product during releasing such that it may rotate or partly rotate when releasing it in e.g. said tray, and thus the appearance of the packaging in the tray may be at least somewhat destroyed.

Moreover, the gripping means is open at both sides and therefore there is always a risk that the food products can fall out while moving the food products from where they are picked up until they are released from the gripping means.

Moreover, the packaging requires highly accurate positioning of the gripping means since it is moved very close to the bottom of the tray. Thus, when e.g. making two layers or e.g. three layers of food products, the gripping means must be re-programmed for two or more height locations, e.g. when a second height location corresponds to the top of the first layer in the tray. Also, due to the different thicknesses and the deformability of the food products it may be difficult, if not impossible to program the gripper means to be able to perform multilayer packaging.

The inventor of the present invention has appreciated that there is thus a need for an improved gripper device for solving the above mentioned problems and has in consequence devised the present invention.

### SUMMARY OF THE INVENTION

It would be advantageous to achieve an improved gripper device that is capable of picking up deformable food items such as, but not limited to, chicken breast, chicken fillets with or without tendon, and accurately place them in a compact form with a nice appearance in e.g. a tray.

In general, the invention preferably seeks to mitigate, alleviate or eliminate one or more of the above mentioned disadvantages singly or in any combination. In particular, it may be seen as an object of the present invention to provide a method and an apparatus that solves the above mentioned problems, or other problems, of the prior art.

To better address one or more of these concerns, in a first aspect of the invention a pick and place gripper device is provided for picking up and re-positioning a deformable food item carried by a support surface, comprising:
a pair of jaws configured to move by a first moving means from an open position to a closed position, and vice versa, wherein the pick and place gripper device further comprises a frame structure arranged between the jaws comprising an outer frame and a top frame. The pick and place gripper device is characterised in that the jaws are designed such that in the closed position the jaws define a cavity for shaping and carrying the deformable food item where the cavity comprises a side wall and a bottom, wherein after picking up the deformable food item by the jaws, the frame structure and/or the pair of jaws are configured to move relative towards each other, such that the outer frame supplies a pressure onto the deformable food item causing the deformable food item to be at least partly compressed into the frame structure where it is retained in a compact pre-shaped form, wherein said pick and place gripper device is configured for moving the jaws from the closed position to the open position while the frame structure preserves the deformable food item in the compact pre-shaped form when releasing the deformable food item, wherein said pick and place gripper device is configured for subsequently moving the frame structure down to a stop position causing a releasing of the deformable food item in the compact pre-shaped form at the re-positioning position, where the outer frame essentially follows the shape of the side wall of the cavity, and wherein the geometry of the outer frame corresponds to the inner geometry of the jaws when being in closed position such that the outer frame slides/touches the side walls of the jaws.

Accordingly, a pick and place gripper device is provided that is capable of picking up the deformable food item that may be selected from a plurality of deformable items from e.g. a conveyor means such as an infeed conveyor of any type, and retained it in a compact pre-shaped until it is re-positioned and released from the pick and place gripper device. The position of re-positioning could e.g. include placing the deformable item into a tray, where two or more items are to be placed in.

The frame structure may be considered as a pre-shape mould that is designed such that the size ranges of the deformable food item fit therein. As an example, the size of the frame structure is preferably such that it fits to the size distribution of the deformable food items such that the smallest deformable food items will be retained therein in a compact pre-shaped form and also such that the largest deformable food items are not too large for the frame structure. Moreover, since the deformable food item is retained in a compact pre-shaped form as defined via the shape of the frame structure it will be released at the re-positioning position, e.g. said tray, in more or less exactly this form. Thus, not only may the shape of the deformable item in e.g. the tray be controlled, but also the space needed for packing two or more deformable food items together may be minimized and the deformable product(s) will have a more uniform and better appearance in the tray. In the above case, the size of the tray may be minimized.

Also, by enclosing the deformable food item via the jaws and the frame structure the deformable food product becomes "encapsulated" and thus there is no risk that the product will fall out of the gripper device.

In the releasing process of the deformable food item from the gripper device, the first and the second jaws are moved from the closed position to the open position sufficiently fast such that the deformable food item in the compact pre-shaped form will be temporarily retained within in the frame structure in the pre-shaped form. It is not until the subsequent movement of the frame structure down to the stop position that is located above the re-positioning position that the item is released from the frame structure. The re-positioning position may as an example be a space within a tray, where e.g. there are one or more deformable items and where the re-positioning position is the position within the tray next to or between the one or more deformable items in the tray. The height between the re-positioning position and the stop position may be several millimetres up to one or more sentimeters, where this distance may be operated based on the thickness/height of the deformable food item(s) and/or the number of deformable food item layers. This distance may e.g. be dynamically adjusted depending on where in the "stacking process" the pick and place gripper device is. As an example, the stop position may be different if one (or more) layers have been placed into e.g. the tray.

The term "the frame structure arranged between the jaws" may be understood as being arranged between vertical axis extending through the jaws.

In one embodiment, the relative movement between frame structure and/or the pair of jaws comprises that the pair of jaws, subsequent to picking up the deformable food item, move upwards towards the frame structure, where the frame structure is stationary in relation to the pair of jaws.

In another embodiment, the relative movement between frame structure and/or the pair of jaws comprises that the pair of jaws and the frame structure, subsequent to picking up the deformable food item, move towards each other.

In one embodiment, the distance of the stop position may be fixed but selected such that two or more layers of deformable food items may be created. Thus, the distance is preferably sufficiently large for enabling stacking two or more layers together.

In another embodiment, there may be two or more stop positions. As an example, a robotic system comprising a robotic arm to which the pick and place gripper device is attached to may be programmed to adjust the stop position based which layer is being made, e.g. whether it is the first layer in e.g. a tray or a second layer etc.

In yet another embodiment, the adjustment of the stop position may be mechanically operated where based on physical contact with the flexible food items the stop position may be determined. As an example, a slight impact between the pick and place gripper device and the upmost layer may trigger/indicate a reference point for the stop position where e.g. the stop position may be few millimetres or sentimeters above this point.

In one embodiment, the pair of jaws comprise a bottom portion and a side portion where in the closed position the bottom portions define the bottom of the cavity and the side portions define the side wall of the cavity.

In one embodiment, after picking up the deformable food item by the jaws, the frame structure is configured to move downwards by a second moving means towards the deformable food item such that the outer frame moves between the side wall and the deformable food item.

In one embodiment, the frame structure and/or the pair of jaws is connected to a spring system configured to be at least partly in a compressed state so as to preserve a pressure onto the deformable food item, the subsequent movement of the frame structure down to the stop position being caused by a release of the spring system from being in at least partly in the compressed state. Accordingly, the releasing of the deformable food item is obtained via releasing of the potential energy stored in the spring system due to the compressed state into a kinetic energy, e.g. until the spring system reaches its relaxed state (it may of course temporarily partly exceed its relaxed state or relaxed length), or until it hits a stopping means that stops the frame structure. Thus, a simple solution is provided for moving the frame structure to the stop position. The spring system may include any type of spring or spring load know to person skilled in the art, such as, but not limited to Cantilever spring - a spring which is fixed only at one end, coil spring or helical spring, a spring made by winding a wire around a cylinder, and the conical spring.

In one embodiment, the spring system may be brought into the compressed state via e.g. the movement of the frame structure via the second moving means, after the deformable item is picked up by the jaws, where the spring system may be attached to the second moving means or the pair of jaws such that it becomes at least partly compressed together.

In another embodiment, the spring system may be brought into the compressed state via e.g. the movement of the pair of jaws, after the deformable item is picked up by the jaws, upwards and towards the frame structure where the spring system may be attached to the frame structure or the pair of jaws.

In one embodiment, the pair of jaws are designed such that in the closed position one end of the cavity comprises an opening configured to receive a tail portion of the deformable food item such that the tail portion becomes freely hanging out from the opening. The compactness of the deformable food item within the frame structure may thus facilitated since tail part can in some instances be relative spacious which may thus affect the shaping of the deformable food item in the frame structure. Thus, by allowing the tail part to freely hang out from the opening, the deformable food item may be retained more compact.

By the term "tail portion" is according to the present invention meant the thinnest end part of the deformable food item, e.g. the thinnest part of the poultry fillet with or without tendon or the thinnest part of the poultry breast.

In one embodiment, the frame structure comprises an downwardly extending structure positioned at one end of the frame structure configured to, when moving the frame structure downwards by the second moving means towards the deformable food item, to penetrate through the opening and below the bottom of the cavity so as to push the tail portion of the deformable product through the opening. Thus, the downwardly extending structure acts as a kind of a wall and allows e.g. any types of poultry fillets with our without tendon or poultry breasts such as chicken breast that are too large (with the tail portion) to fit into the pick and place gripper device since the tail portion will hang out from the pick and place gripper device. Also, this allows the deformable food products to fit into a smaller tray.

Also, the operation of the pick and place gripper device may such that when placing the poultry breast or fillet, e.g. the chicken breast fillet, the movement of the pick and place gripper device may be such that the tail portion becomes folded under that poultry fillet/breast. This may be achieved via a sudden horizontal side movement of the pick and place gripper device in a direction away from the end of the pick and place gripper device where the tail portion is (parallel to the longitudinal axis of the pick and place gripper device).

In one embodiment, the pair of jaws are designed such that the cavity is symmetric in relation to a centre axis extending perpendicular to an axis extending between the openings at the opposite ends, and where the pair of jaws are designed such that in the closed position both ends of the cavity comprises an opening configured to receive a tail portion of the deformable food item such that the tail portion becomes freely hanging out from one of the opening. The current orientation of the gripper is thus not relevant when picking up a deformable food item having a tail portion such as poultry breast or poultry fillet with or without tendor and thus a sudden rotational movement up to 180° is not needed due to the symmetry and the fact that both ends of the pick and place gripper device and the fact that both ends have an opening. This obviously reduces the cycles time of picking and replacing the deformable food items.

Also, the releasing of the deformable food product in compact and pre-shaped form in e.g. a tray will be symmetric, which may give a better appearance it may be more favourable to have more natural and uniform appearance in the tray, which obviously will be more attractive towards customers. An example of such deformable food products are food products that are supposed to have symmetric, such as but not limited to, fish fingers, fish rolls and the like.

In one embodiment, the frame structure comprises downwardly extending structures positioned at opposite ends of the frame structure configured to, when moving the frame structure downwards by the second moving means towards the deformable food item, to penetrate through the openings and below the bottom of the cavity so as to push the tail portion of the deformable product through one of the openings. Thus, as already mentioned the downwardly extending structures act as a wall for the tail portion meaning that large deformable food items, that might otherwise be too large for the pick and place gripper device, will fit into the pick and place gripper device.

In one embodiment, the frame structure comprises multiple of openings.

In another embodiment, the frame structure is a mesh-like structure.

The frame structure is preferably made of light weight material such as, but not limited to, any type of plastic material. The multiple openings andor the mesh-like structure not only lighten the frame structure but also greatly reduces the friction between the frame structure and the deformable food item.

In one embodiment, the pick and place gripper is operated by a robotic system comprising a robotic arm or the like to which the pick and place gripper is attached to. The robotic system may be capable of keeping track of the re-positioning position, e.g. a tray, where the tray may e.g. be located on a tray infeed conveyor, where e.g. via tracking the robotic system knows the exact position of the tray via e.g. tracking module. Moreover, the robotic system may know historically the exact location of food items at the re-positioning position, e.g. the tray. As an example, if three chicken fillets are to be put into the tray the robotic system knows the position of all the chicken fillets in the tray so if one is missing the robotic system knows about the empty space in the tray. Thus, based on this, the robotic system operates the position of the pick and place gripper e.g. when releasing the deformable food item from the pick and place gripper device into e.g. the tray.

Also, the robotic system and/or the pick and place gripper device may utilize any type of a vision, e.g. digital camera, line-scan and the like, to operate the location of the pick and place gripper when releasing the deformable food item in compact form into the tray.

Similarly, all incoming deformable food item may pass a sensor means, e.g. any type of vision system that is used as input data for the robotic system to know about the location of the deformable food items to be picked up.

In one embodiment, the deformable food product is a poultry fillet with or without tendon or poultry breast, and where the pair of jaws are designed such that the cavity is asymmetric and substantially follows the shape of the poultry fillet or breast. Accordingly, in relation to a centre axis extending perpendicular to an axis extending between opposite ends of the gripper device, the gripper is asymmetric and is in line with the shape of the poultry fillet/breast, preferably somewhat smaller such that the poultry fillet/breast become at least partly compressed in the cavity. Thus, the poultry fillet(s)/breast(s) will fit very well into the cavity of the gripper device and more importantly, when releasing the poultry fillet(s)/breast(s) into e.g. a tray their compact and pre-shaped form in the tray will have more natural and uniform appearance, which obviously will be more attractive towards customers.

In a second aspect of the invention a method is provided of operating a pick and place gripper device for picking up and re-positioning a deformable food item carried by a support surface, the pick and place gripper device comprising:
- a pair of jaws configured to move by a first moving means from an open position to a closed position, and vice versa, where the jaws are designed such that in the closed position the jaws define a cavity for shaping and carrying the deformable food item where the cavity comprises a side wall and a bottom, and
- a frame structure arranged between the jaws comprising an outer frame and a top frame where the outer frame essentially follows the shape of the side wall of the cavity, wherein the method comprises:

- picking up the deformable item, where the picking up comprises:
   ∘ advancing the pair of jaws towards deformable item and moving the pair of jaws from the open position towards the closed position,
   ∘ moving the frame structure and/or the pair of jaws relative towards each other such that outer frame supplies a pressure onto the deformable food item causing the deformable food item to be at least partly compressed into the frame structure where it is retained in a compact pre-shaped form,
- releasing the deformable food item from the jaws, where the releasing comprises:
   ∘ moving the jaws from the closed position to the open position while the frame structure preserves the deformable food item in the compact pre-shaped form, and subsequently
   ∘ moving the frame structure down to a stop position such that the deformable food item becomes released in the compact pre-shaped form at the re-positioning position,
   wherein the geometry of the outer frame corresponds to the inner geometry of the jaws when being in closed position such that the outer frame slides/touches the side walls of the jaws.

In one embodiment, the pair of jaws comprise a bottom portion and a side portion where in the closed position the bottom portions define the bottom of the cavity and the side portions define the side wall of the cavity and are designed such that in the closed position one end of the cavity comprises an opening, where the method comprises controlling orientation of the gripper device, when picking up the deformable food item, such that a tail portion of the deformable food item is located at the opening side of the gripper device so as to allow the tail portion to freely hanging out from the opening.

In one embodiment, the jaws are designed such that in the closed position at least one end of the jaws and thus of the cavity is adapted for receiving a tail part of the deformable food items such that the tail part is freely hanging out from the opening, the method comprising:
- moving the gripper device towards a re-positioning position,
- while moving, or subsequent to the moving, applying at least partly a horizontal movement such that the freely hanging tail part becomes folded under the gripper device and thus under the deformable food item, and
- releasing the deformable food item at the re-positioning such that the tail part is folded under the remaining part of the deformable food item at the re-positioning position.

As already stated, the re-positioning could e.g. be a tray resting on a support surface such as a conveyor belt. If the food item is a poultry fillet/breast such as a chicken fillet/breast it is no possible to put it into e.g. the tray in a more compact way such that the size of the tray may be greatly reduced.

In one embodiment, the deformable food product is a poultry fillet/breast, and where the pair of jaws are designed such that the cavity is asymmetric and substantially follows the shape of the poultry fillet/breast such that when releasing the poultry fillet/breast into a tray the compact and pre-shaped form in the tray will be preserved.

In one embodiment, the deformable food product has a symmetric shape, and where the pair of jaws are designed such that the cavity is symmetric and substantially follows the shape of the deformable symmetric food product such that when releasing the deformable symmetric food product into a tray the compact and pre-shaped form in the tray will be preserved.

In a third aspect of the invention a method is provided of picking up and re-positioning a deformable food item carried by a gripper device, where the gripper device is designed for picking up deformable items having a tail part such as poultry fillet/breast and the like, where the tail part is freely hanging out from one end of the gripper device. As an example, the gripper device may comprise a first and a second jaw, such that after picking up the deformable item and when the jaws are in a closed position an opening is provided at one or both ends for allowing the tail part to hang out therefrom. Such a gripper device could as an example be, but is not limited to, said gripper device.

The method comprises the step of, prior to releasing the deformable food item with the freely hanging tail part through the opening:
moving the gripper device towards a re-positioning position,
while moving, or subsequent to the moving, applying at least partly a horizontal movement such that the freely hanging tail part becomes folded under the gripper device and thus under the deformable food item, and
releasing the deformable at the re-positioning, e.g. a tray, such that the tail part is folded under the remaining part of the deformable food item.

The at least partly horizontal movement may be achieved via a sudden horizontal side movement of the gripper device in a direction away from the end of the pick and place gripper device where the tail portion is (parallel to the longitudinal axis of the pick and place gripper device).

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
figures 1 shows schematically one embodiment of a pick and place gripper device according to the present invention and the functioning of picking up and re-positioning a deformable food item carried by a support surface,
figures 2 to 8 show a perspective and a front view of a pick and place gripper device according to the present invention,
figure 9 shows an example where a asymmetric and symmetric deformable food items have been put into a tray,
figure 10 shows a flowchart of one embodiment of a method according to the present invention for operating a gripper device shown in figures 1 to 9, and
figure 11 shows an embodiment of the pick and place gripper device in figure 1 where a further comprising a spring system utilized in releasing the deformable food item.

### DESCRIPTION OF EMBODIMENTS

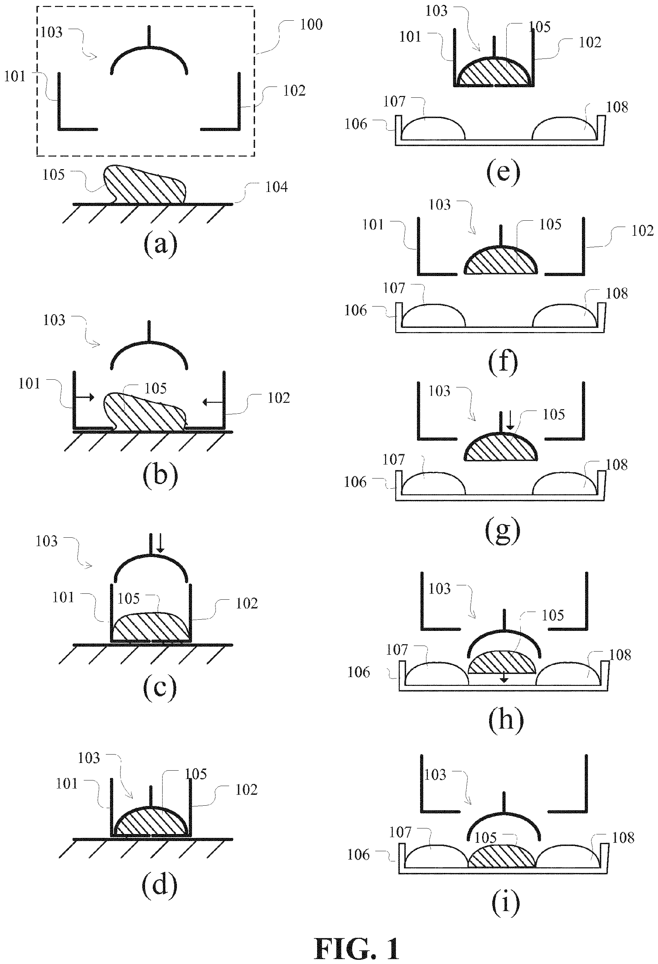

Figures 1(a)-(i) shows schematically one embodiment of a pick and place gripper device 100 according to the present invention and the functioning of picking up and re-positioning a deformable food item 105 carried by a support surface 104. The pick and place gripper device 100 comprises a pair of jaws 101, 102 and a frame structure 103.

The pair of jaws 101, 102, which as shown here in the cross-sectional view have "L-shaped-like" cross section with the leading edges facing each other, is configured to move by a first moving means (not shown) from an open position to a closed position, and vice versa. The jaws are designed such that in the closed position the jaws define a cavity (not shown here) for shaping and carrying the deformable food item where the cavity comprises a side wall and a bottom.

The frame structure is arranged between the jaws 101, 102 and comprises an outer frame and a top frame where the outer frame essentially follows the shape of the side wall of the cavity. This will be illustrated and discussed in more details later.

Figures (a)-(d) illustrate the process of picking up the deformable item 105.

Figure 1(a) shows the jaws 101, 102 being in an open position positioned above the deformable food item to be picked up.

Figure 1(b)-(c) show where the jaws 101, 102 are advanced towards deformable item and are moved from the open position towards the closed position, where the deformable food object 105 is transferred to a more compact form, i.e. is shaped and carried by the jaws 101, 102.

Figure 1(c) shows also where the frame structure 103 is moved downwards by a second moving means (not shown) towards the deformable food item, and figure 1(d) shows where the outer frame of the frame structure 103 moves between the side wall and the deformable food item and supplies a pressure onto the deformable food item causing the deformable food item 105 to be at least partly compressed into the frame structure where it is retained in a compact pre-shaped form.

It should be noted, although not illustrated here, that the frame structure 103 and/or the pair of jaws may be configured to move relative towards each other, e.g. it may the pair of jaws that move upwards towards the frame structure that may be stationary (not shown here), or both the frame structure and the pair of jaws may be configured to move towards each other (not shown here).

Figures (e)-(i) illustrate the process of releasing the deformable food item from the jaws/frame structure at a re-positioning position, which in this example is a tray.

Figure 1(e) shows where the pick and place gripper device is positioned directly above an empty space between two food item 107, 108 within the tray 106.

Figure 1(f) shows where the jaws 101, 102 are moved from the closed position to the open position while the frame structure preserves the deformable food item in the compact pre-shaped form. The movement of moving the jaws to the open position is of course sufficiently quick to ensure the that deformable foot item is temporarily fixed in the frame structure.

Figure 1(g) shows the subsequent movement of the frame structure down to a stop position such that the deformable food item becomes released in the compact pre-shaped form at the re-positioning position, i.e. between the two food items 107, 108 as shown in figure 1(h) showing where the frame structure 103 has reached a stop position above the re-positioning position resulting that the deformable food item is released into the tray in the compact pre-shaped defined via the shape of the frame structure.

The pick and place gripper is typically operated by a robotic system that is capable of keeping track of the tray 106 at all times, e.g. on a tray infeed conveyor, e.g. also when the tray may be advance at least partly via e.g. tracking module. Moreover, the robotic system may know historically where food items 106 and 108 are, i.e. since it put these items into the tray 106. Thus, based on this, the robotic system knows about the empty space between the food items 107, 108 and thus based thereon positions the pick and place gripper exactly there between.

Also, the robotic system and/or the pick and place gripper device may utilize any type of a vision system to operate the location of the pick and place gripper when releasing the deformable food item in compact form into the tray 106.

Similarly, all incoming deformable food item may pass a sensor means, e.g. any type of vision system that is used as input data for the robotic system to know about the location of the deformable food items to be picked up.

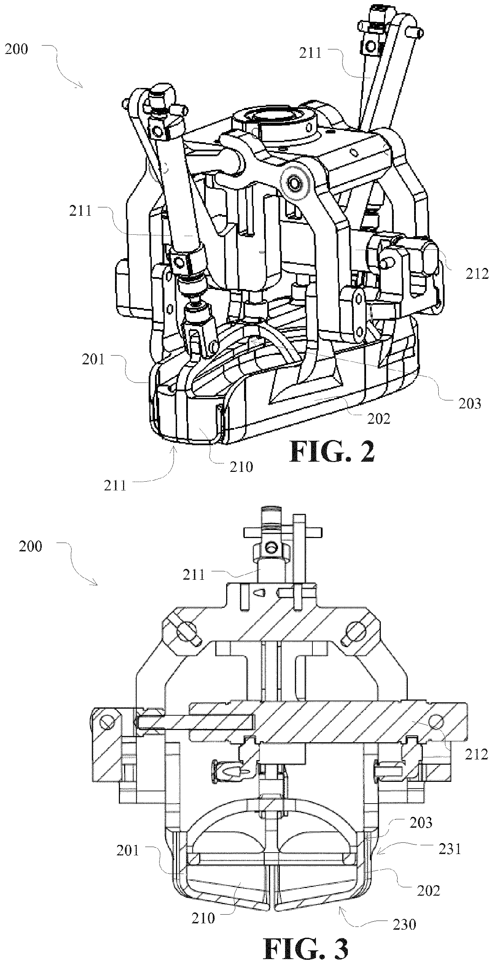

Figure 2 and 3 show a perspective view and a front view of one embodiment of a pick and place gripper device 200 according to the present invention, comprising a frame structure 203 and a pair of jaws 201, 202 attached to a first moving means 212 adapted to move the jaws 201, 202 from an open position to a closed position as shown here, and vice versa, as illustrated in figure 1(b)-(c) and figure 1(f).

As shown here, each of the jaws 201, 202 comprise a bottom portion 230 and a side portion 231 such that when the jaws are in closed position as shown in figure 2 the bottom portions define the bottom of a cavity of the pick and place gripper device and the side portions define the side wall of the cavity.

In the embodiment shown here, the pair of jaws are designed such that in the closed position one end of the cavity comprises an opening 211 configured to receive a tail portion (not shown) of the deformable food item such that the tail portion becomes freely hanging out from the opening. This tail portion could e.g. be from a chicken fillet with or without tendon or poultry breast (fillet/breast) or any type of poultry fillet/breast.

The frame structure of the gripper device shown here further comprises an downwardly extending structure 210 positioned at one end of the frame structure configured to, when moving the frame structure downwards by the second moving means towards the deformable food item, to penetrate through the openings and below the bottom of the cavity so as to push the tail portion of the deformable product through one of the openings. Thus, the length of the pick and place gripper device 200 may be shortened since such tail portions may be relative spacious.

As will be discussed in more details later, the frame structure is attached to a second moving means 211 adapted, subsequent to picking up the deformable foot items as illustrated in figure 1(c)-(d), and also when releasing the deformable item in compact form from the frame structure as shown in figure 1(g)-(h).

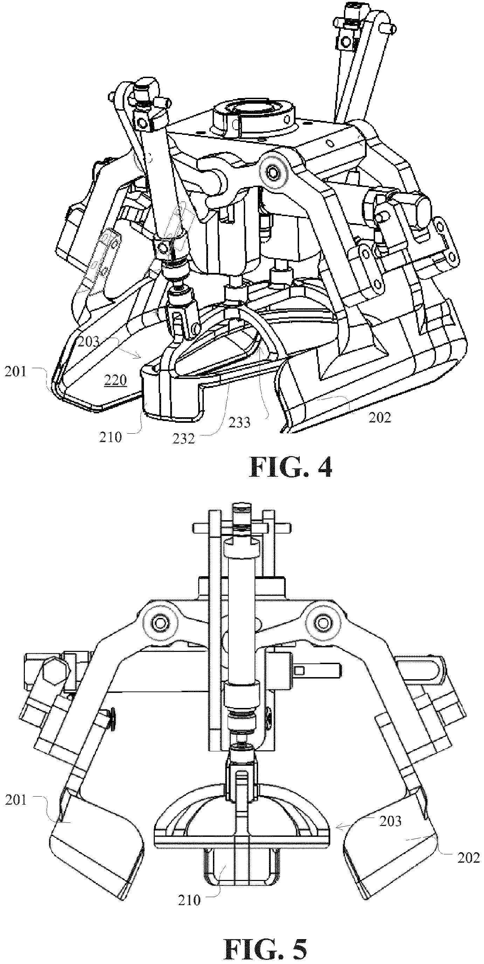

Figures 4 and 5 shows the gripper in figures 2 and 3 with the jaws 201, 202 in open position, showing in more details the frame structure 203 comprising an outer frame 232 and a top frame 233, where the outer frame essentially follows the shape of the side wall of the cavity as illustrated in figure 1(c)-(d). As already discussed in relation to figure 1 this is to ensure that after moving the frame structure 103 downwards by the second moving means 211 towards the deformable food item the outer frame 232 moves between the side wall and the deformable food item and supplies a pressure onto the deformable food item causing the deformable food item to be at least partly compressed into the frame structure where it is retained in a compact pre-shaped form. The geometry of the outer frame 232 corresponds to the inner geometry of the jaws 201, 202 when being in closed position such that the outer frame 232 slides/touches the side walls of the jaws and thus the side walls of the cavity defined by the jaws 201, 202 in closed position.

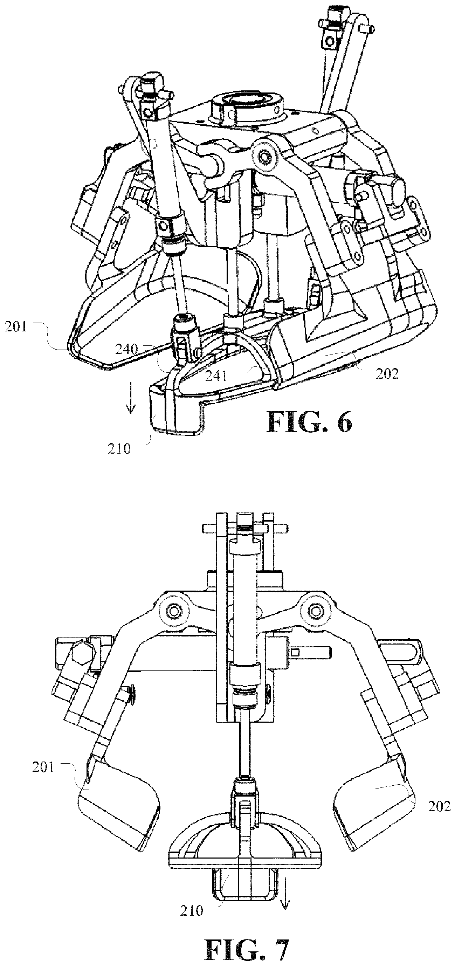

Figures 6 and 7 shown the pick and place gripper device shown in figures 2 to 5, where the frame structure 203 is moved down to a stop position, similar as illustrated in figure 1(h)-(i).

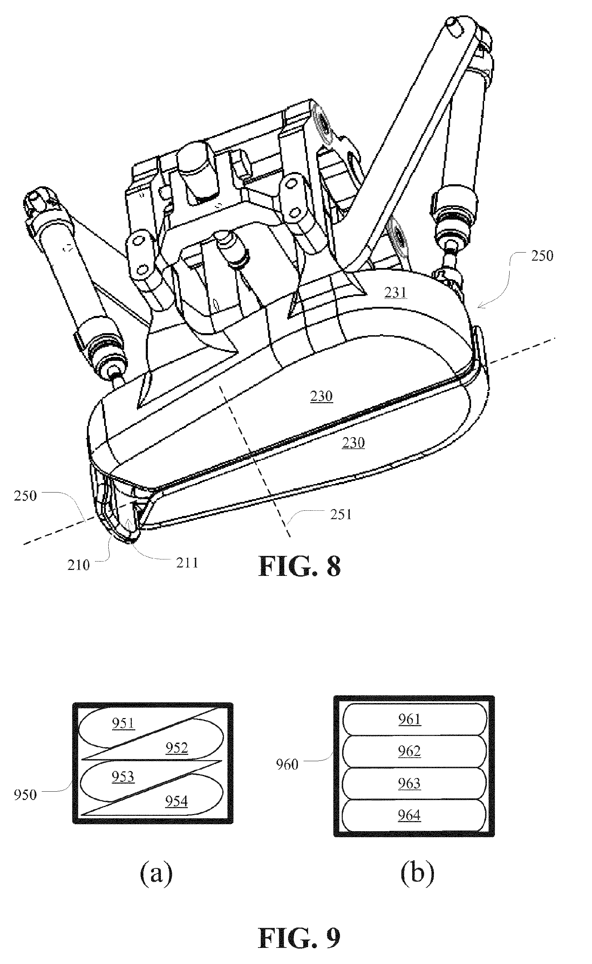

Figure 8 shows a perspective view of the gripper device in figures 2-7, seen from below in a closed position, showing the opening through configured to receive a tail portion of the deformable food item to be picked up.

As shown here, the bottom 230 and the sides 232 of jaws are designed such that the cavity 250 is asymmetric in relation to a centre axis 241 extending perpendicular to an axis extending between the opposite ends of the cavity 250 defined by the jaws. In this case, the shape of the cavity is similar to the shape of a poultry fillet/breast such as chicken fillet/breast. Also, as already addressed, the cavity shown here has a dimension compared to the deformable food items, i.e. poultry fillet/breast, such that a pre-shaping takes place when receiving the poultry fillet/breast, similar as illustrated in figure 1(c).

In another embodiment, the pair of jaws are symmetric and designed such that in the closed position both ends of the cavity comprises an opening configured to receive a tail portion of the deformable food item such that the tail portion becomes freely hanging out from one of the opening.

As shown in figures 2 to 8, the top frame 233 of the frame structure of the pick and place gripper has a mesh like structure comprising several concave beams or members 250, 251 that define the mesh like structure and define the shape of the frame structure that acts as a kind of a mould for the deformable food item.

Generally, the frame structure may also be made with a 3D printer and thus be made as a single piece structrue, or as a solid structur comprising multiple of holes. Whether being a mesh like structure or a structure having plurality of holes, in both scenarios the sticking effect between the deformable food item and the frame struture is reduced, but this may also be formulated as preventing vacuum between the frame structure and the deformable food item.

Figure 9(a) shows an embodiment where the deformable food product is a poultry fillet/breast or any food product having similar shape, and where the pair of jaws are as shown in figure 8 designed such that the cavity is asymmetric and substantially follows the shape of the poultry fillet/breast. Accordingly, in relation to a centre axis extending perpendicular to an axis extending between opposite ends of the gripper device, the gripper is asymmetric and is in line with the shape of the poultry fillet/breast, preferably somewhat smaller such that the poultry fillet/breast become at least partly compressed in the cavity. Thus, the poultry fillet(s)/breast(s) will fit very well into the cavity of the gripper device and more importantly, when releasing poultry fillets/breasts 951-954 into e.g. a tray 950 their compact and pre-shaped form in the tray will have more natural and uniform appearance, which obviously will be more attractive towards customers.

Figure 9(b) depicts a scenario where the gripper device is symmetric such that the releasing of the deformable food product 961-964 in compact and pre-shaped form in e.g. a tray 960 will be symmetric, which may give a better appearance it may be more favourable to have more natural and uniform appearance in the tray, which obviously will be more attractive towards customers. An example of such deformable food products are food products that are supposed to have symmetric, such as but not limited to, fish fingers, fish rolls and the like.

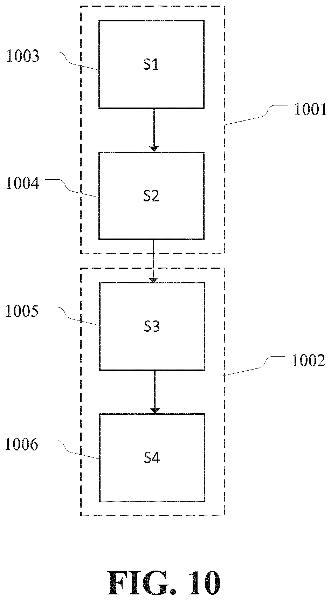

Figure 10 shows a flowchart of one embodiment of a method according to the present invention of operating a pick and place gripper device for picking up and re-positioning a deformable food item carried by a support surface, the pick and place gripper device comprising:
- a pair of jaws configured to move by a first moving means from an open position to a closed position, and vice versa, where the jaws are designed such that in the closed position the jaws define a cavity for shaping and carrying the deformable food item where the cavity comprises a side wall and a bottom, and
- a frame structure arranged between the jaws comprising an outer frame and a top frame where the outer frame essentially follows the shape of the side wall of the cavity.

The method comprises two primary steps, a first primary step 901 of picking up the deformable item, and a second primary step 902 of releasing the deformable food item from the jaws.

The first primary step 1001 comprises the steps of:
Step S1 1003, of advancing the pair of jaws towards deformable item and moving the pair of jaws from the open position towards the closed position, and
Step S2 1004, of moving the frame structure downwards by a second moving means towards the deformable food item such that the outer frame moves between the side wall and the deformable food item and supplies a pressure onto the deformable food item causing the deformable food item to be at least partly compressed into the frame structure where it is retained in a compact pre-shaped form.

The second primary step 1002 comprises the steps of:
Step S3 1005, of moving the jaws from the closed position to the open position while the frame structure preserves the deformable food item in the compact pre-shaped form, and subsequently, and
Step S4 1005, of moving the frame structure down to a stop position such that the deformable food item becomes released in the compact pre-shaped form at the re-positioning position.

In one embodiment, the jaws are designed such that in the closed position at least one end of the jaws and thus of the cavity adapted for receiving a tail part of the deformable food items such that the tail part is freely hanging out from the opening.

The step S4 may in one embodiment further comprise the sub-steps of:
- moving the gripper device towards a re-positioning position,
- while moving, or subsequent to the moving, applying at least partly a horizontal movement such that the freely hanging tail part becomes folded under the gripper device and thus under the deformable food item, and
- releasing the deformable at the re-positioning such that the tail part is folded under the remaining part of the deformable food item at the re-positioning position.

Accordingly, it is possible to release e.g. chicken fillets/breasts having thin tail part into e.g. a tray such that the tail part is folded under the remaining part of the chicken fillet/breast and thus make it more compact in the tray. Obviously, this will also result in that smaller trays are needed for the packing process.

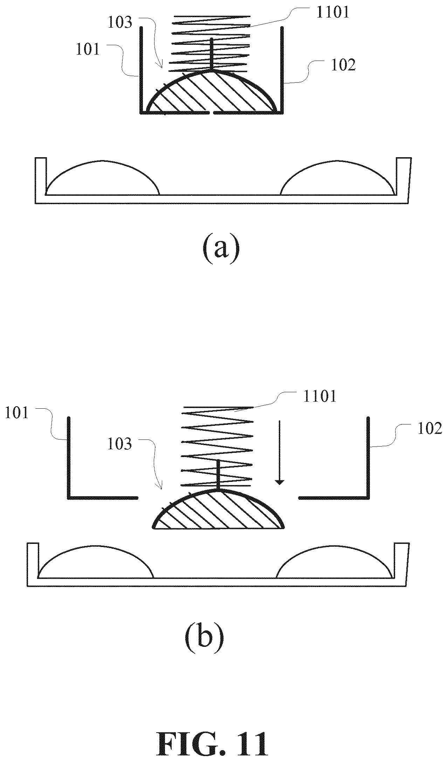

Figure 11 shows an embodiment of the pick and place gripper device in figure 1, further comprising a spring system 1101 utilized in releasing the deformable food item.

As shown in figure 11(a) the frame structure 103 is connected to the spring system where prior to releasing the deformable food item into the tray (corresponding to figure 1(e)), the spring system is at least partly in a compressed state and thus has a potential energy stored in the spring system.

Figure 11(b) shows the instant after the pair of jaws are moved to an open position (corresponding to figure 1(g)) the spring system instantly pushes the frame structure to the stop position, i.e. the stored potential energy in the spring is converted into a kinetic energy, where the spring system reaches its relaxed state or relaxed length. In that way, no external moving mechanism may be needed to move the frame structure 103 to the stop position.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

## Claims

1. A pick and place gripper device (100, 200) for picking up and re-positioning a deformable food item (105) carried by a support surface (104), comprising:
• a pair of jaws (101, 102, 201, 202) configured to move by a first moving means (212) from an open position to a closed position, and vice versa,
wherein the pick and place gripper device further comprises:
• a frame structure (103, 203) arranged between the jaws (101, 102, 201, 202) comprising an outer frame (232) and a top frame (233),
wherein the jaws are designed such that in the closed position the jaws define a cavity for shaping and carrying the deformable food item where the cavity comprises a side wall and a bottom, wherein after picking up the deformable food item by the jaws, the frame structure and/or the pair of jaws are configured to move relative towards each other, such that the outer frame supplies a pressure onto the deformable food item causing the deformable food item to be at least partly compressed into the frame structure where it is retained in a compact pre-shaped form, wherein said pick and place gripper device (100, 200) is configured for moving the jaws from the closed position to the open position while the frame structure preserves the deformable food item in the compact pre-shaped form when releasing the deformable food item,
**characterised in that**
said pick and place gripper device (100, 200) is configured for subsequently moving the frame structure down to a stop position causing a releasing of the deformable food item in the compact pre-shaped form at the re-positioning position, where the outer frame (232) essentially follows the shape of the side wall of the cavity, and wherein the geometry of the outer frame (232) corresponds to the inner geometry of the jaws (201, 202) when being in closed position such that the outer frame (232) slides/touches the side walls of the jaws.

2. The pick and place gripper device according to claim 1, wherein the pair of jaws (101,102,201,202) comprise a bottom portion (230) and a side portion (231) where in the closed position the bottom portions define the bottom of the cavity and the side portions define the side wall of the cavity.

3. The pick and place gripper according to claim 1 or 2, wherein the frame structure (103,203) is configured to move downwards by a second moving means towards the deformable food item such that the outer frame (232) moves between the side wall and the deformable food item after picking up the deformable food item by the jaws.

4. The pick and place gripper according to claim any of the preceding claims, wherein the frame structure (103,203) and/or the pair of jaws (101,102,201,202) is connected to a spring system (1101) configured to be at least partly in a compressed state so as to preserve a pressure onto the deformable food item, the subsequent movement of the frame structure down to the stop position being caused by a release of the spring system from being in at least partly in the compressed state

5. The pick and place gripper according to any of the preceding claims, wherein the pair of jaws (101,102,201,202) are designed such that in the closed position one end of the cavity comprises an opening configured to receive a tail portion of the deformable food item such that the tail portion becomes freely hanging out from the opening.

6. The pick and place gripper according to claim 5, wherein the frame structure (103,203) comprises a downwardly extending structure positioned at one end of the frame structure configured to, to penetrate through the opening and below the bottom of the cavity so as to push the tail portion of the deformable product through the opening when moving the frame structure downwards by the second moving means towards the deformable food item.

7. The pick and place gripper according to any of the claims 1 to 4, wherein the pair of jaws (101,102,201,202) are designed such that the cavity is symmetric in relation to a centre axis extending perpendicular to an axis extending between the openings at the opposite ends, and where the pair of jaws are designed such that in the closed position both ends of the cavity comprises an opening configured to receive a tail portion of the deformable food item such that the tail portion becomes freely hanging out from one of the opening.

8. The pick and place gripper according to claim 7, wherein the frame structure (103,203) comprises downwardly extending structures (210) positioned at opposite ends of the frame structure configured to penetrate through the openings and below the bottom of the cavity so as to push the tail portion of the deformable product through one of the openings when moving the frame structure downwards by the second moving means towards the deformable food item.

9. The pick and place gripper according to any of the preceding claims, wherein the frame structure (103,203) comprises multiple of openings and/or is a mesh-like structure and has a geometry defining the pre-shaped form.

10. A method of operating a pick and place gripper device (100,200) for picking up and re-positioning a deformable food item carried by a support surface, the pick and place gripper device comprising:
• a pair of jaws (101, 102, 201, 202) configured to move by a first moving means (212) from an open position to a closed position, and vice versa, where the jaws are designed such that in the closed position the jaws define a cavity for shaping and carrying the deformable food item where the cavity comprises a side wall and a bottom, and
• a frame structure (103, 203) arranged between the jaws (101, 102, 201, 202) comprising an outer frame (232) and a top frame (233) where the outer frame (232) essentially follows the shape of the side wall of the cavity,
wherein the method comprises:
• picking up the deformable item (1001), where the picking up comprises:
∘ advancing the pair of jaws (1003) towards deformable item and moving the pair of jaws from the open position towards the closed position,
∘ moving the frame structure (1004) and/or the pair of jaws relative towards each other such that the outer frame supplies a pressure onto the deformable food item causing the deformable food item to be at least partly compressed into the frame structure where it is retained in a compact pre-shaped form,
• releasing the deformable food item from the jaws (1002), where the releasing comprises:
∘ moving the jaws from the closed position (1005) to the open position while the frame structure preserves the deformable food item in the compact pre-shaped form, and subsequently
∘ moving the frame structure down to a stop position (1006) such that the deformable food item becomes released in the compact pre-shaped form at the re-positioning position,
wherein the geometry of the outer frame (232) corresponds to the inner geometry of the jaws (201, 202) when being in closed position such that the outer frame (232) slides/touches the side walls of the jaws.

11. The method according to claim 10, wherein the pair of jaws (101,102,201,202) comprise a bottom portion (230) and a side portion (231) where in the closed position the bottom portions define the bottom of the cavity and the side portions define the side wall of the cavity and are designed such that in the closed position one end of the cavity comprises an opening, where the method comprises controlling orientation of the gripper device, when picking up the deformable food item, such that a tail portion of the deformable food item is located at the opening side of the gripper device so as to allow the tail portion to freely hanging out from the opening.

12. The method according to claim 10 or 11, wherein the step of releasing the deformable food item further comprises positioning the gripper device (100,200) such that the stop position is in proximity to the support surface.

13. The method according to any of the claims 10-12, wherein the jaws (101,102,201,202) are designed such that in the closed position at least one end of the jaws and thus of the cavity adapted for receiving a tail part of the deformable food items such that the tail part is freely hanging out from the opening, the method comprising:
• moving the gripper device towards a re-positioning position,
• while moving, or subsequent to the moving, applying at least partly a horizontal movement such that the freely hanging tail part becomes folded under the gripper device and thus under the deformable food item, and
• releasing the deformable at the re-positioning such that the tail part is folded under the remaining part of the deformable food item at the re-positioning position.

14. The method according to any of the claims 10-13, wherein the deformable food product is a poultry fillet/breast, and where the pair of jaws (101,102,201,202) are designed such that the cavity is asymmetric and substantially follows the shape of the poultry fillet/breast such that when releasing the poultry fillet/breast into a tray the compact and pre-shaped form in the tray will be preserved.

15. The method according to any of the claims 10-13, wherein the deformable food product has a symmetric shape, and where the pair of jaws (101,102,201,202) are designed such that the cavity is symmetric and substantially follows the shape of the deformable symmetric food product such that when releasing the deformable symmetric food product into a tray the compact and pre-shaped form in the tray will be preserved.

## Patentansprüche

1. Pick-and-Place-Greifervorrichtung (100, 200) zum Aufgreifen und Neu-Positionieren eines verformbaren Nahrungsmittelobjekts (105), das von einer Auflagefläche (104) getragen wird, Folgendes umfassend:
• ein Paar Backen (101, 102, 201, 202), die dafür eingerichtet sind, sich durch ein erstes Bewegungsmittel (212) von einer offenen Position in eine geschlossene Position, und umgekehrt, zu bewegen,
wobei die Pick-and-Place-Greifervorrichtung außerdem Folgendes umfasst:
• eine Rahmenstruktur (103, 203), die zwischen den Backen (101, 102, 201, 202) angeordnet ist und die einen äußeren Rahmen (232) und einen oberen Rahmen (233) umfasst,
wobei die Backen derart konzipiert sind, dass die Backen in der geschlossenen Position einen Hohlraum zum Formen und Tragen des verformbaren Nahrungsmittelobjekts definieren, wobei der Hohlraum eine Seitenwand und einen Boden umfasst und wobei nach dem Aufgreifen des verformbaren Nahrungsmittelobjekts durch die Backen die Rahmenstruktur und/oder das Paar Backen dafür eingerichtet sind, sich relativ aufeinander zu zu bewegen, derart, dass der äußere Rahmen auf das verformbare Nahrungsmittelobjekt einen Druck ausübt, was bewirkt, dass das verformbare Nahrungsmittelobjekt wenigstens teilweise in die Rahmenstruktur hinein zusammengedrückt wird, wo es in einer kompakten vorgeformten Form gehalten wird, wobei die Pick-and-Place-Greifervorrichtung (100, 200) dafür eingerichtet ist, die Backen von der geschlossenen Position in die offene Position zu bewegen, wobei die Rahmenstruktur das verformbare Nahrungsmittelobjekt in der kompakten vorgeformten Form erhält, wenn das verformbare Nahrungsmittelobjekt freigegeben wird,
**dadurch gekennzeichnet, dass**
die Pick-and-Place-Greifervorrichtung (100, 200) dafür eingerichtet ist, die Rahmenstruktur anschließend nach unten zu einer Stoppposition zu bewegen, was eine Freigabe des verformbaren Nahrungsmittelobjekts in der kompakten vorgeformten Form an der Neupositionierungsposition bewirkt, wobei der äußere Rahmen (232) im Wesentlichen der Form der Seitenwand des Hohlraums folgt und wobei die Formgebung des äußeren Rahmens (232) der inneren Formgebung der Backen (201, 202) entspricht, wenn diese sich in der geschlossenen Position befinden, derart, dass der äußere Rahmen (232) an den Seitenwänden der Backen entlanggleitet/diese berührt.

2. Pick-and-Place-Greifervorrichtung nach Anspruch 1, wobei das Paar Backen (101, 102, 201, 202) jeweils einen Bodenabschnitt (230) und einen Seitenabschnitt (231) umfasst,
wobei in der geschlossenen Position die Bodenabschnitte den Boden des Hohlraums definieren und die Seitenabschnitte die Seitenwand des Hohlraums definieren.

3. Pick-and-Place-Greifer nach Anspruch 1 oder 2, wobei die Rahmenstruktur (103, 203) dafür eingerichtet ist, sich durch ein zweites Bewegungsmittel abwärts in Richtung des verformbaren Nahrungsmittelobjekts zu bewegen, derart, dass der äußere Rahmen (232) sich zwischen der Seitenwand und dem verformbaren Nahrungsmittelobjekt bewegt, nachdem das verformbare Nahrungsmittelobjekt durch die Backen aufgegriffen wurde.

4. Pick-and-Place-Greifer nach einem der vorhergehenden Ansprüche, wobei die Rahmenstruktur (103, 203) und/oder das Paar Backen (101, 102, 201, 202) mit einem Federsystem (1101) verbunden ist, das dafür eingerichtet ist, sich wenigstens teilweise in einem zusammengedrückten Zustand zu befinden, um dadurch einen Druck auf das verformbare Nahrungsmittelobjekt aufrecht zu erhalten, wobei die anschließende Bewegung der Rahmenstruktur nach unten zu der Stoppposition durch eine Freigabe des Federsystems verursacht wird, daraus, sich wenigstens teilweise einem zusammengedrückten Zustand zu befinden.

5. Pick-and-Place-Greifer nach einem der vorhergehenden Ansprüche, wobei das Paar Backen (101, 102, 201, 202) derart konzipiert ist, dass in der geschlossenen Position ein Ende des Hohlraums eine Öffnung umfasst, die dafür eingerichtet ist, einen Endabschnitt des verformbaren Nahrungsmittelobjekts aufzunehmen, derart, dass der Endabschnitt frei aus der Öffnung heraushängt.

6. Pick-and-Place-Greifer nach Anspruch 5, wobei die Rahmenstruktur (103, 203) eine sich nach unten erstreckende Struktur umfasst, die an einem Ende der Rahmenstruktur positioniert ist und die dafür eingerichtet ist, durch die Öffnung und unter den Boden des Hohlraums vorzudringen, um dadurch den Endabschnitt des verformbaren Produkts durch die Öffnung zu drücken, wenn die Rahmenstruktur durch das zweite Bewegungsmittel nach unten in Richtung des verformbaren Nahrungsmittelobjekts bewegt wird.

7. Pick-and-Place-Greifer nach einem der Ansprüche 1 bis 4, wobei das Paar Backen (101, 102, 201, 202) derart konzipiert ist, dass der Hohlraum symmetrisch in Bezug auf eine Mittelachse ist, die sich senkrecht zu einer Achse erstreckt, die sich zwischen den Öffnungen an den entgegengesetzten Enden erstreckt, und wobei das Paar Backen derart konzipiert ist, dass in der geschlossenen Position beide Enden des Hohlraums eine Öffnung umfassen, die dafür eingerichtet ist, einen Endabschnitt des verformbaren Nahrungsmittelobjekts aufzunehmen, derart, dass der Endabschnitt frei aus der Öffnung heraushängt.

8. Pick-and-Place-Greifer nach Anspruch 7, wobei die Rahmenstruktur (103, 203) sich nach unten erstreckende Strukturen (210) umfasst, die an entgegengesetzten Enden der Rahmenstruktur positioniert sind und die dafür eingerichtet sind, durch die Öffnungen und unter den Boden des Hohlraums vorzudringen, um dadurch den Endabschnitt des verformbaren Produkts durch eine der Öffnungen zu drücken, wenn die Rahmenstruktur durch das zweite Bewegungsmittel nach unten in Richtung des verformbaren Nahrungsmittelobjekts bewegt wird.

9. Pick-and-Place-Greifer nach einem der vorhergehenden Ansprüche, wobei die Rahmenstruktur (103, 203) mehrere Öffnungen umfasst und/oder eine netzartige Struktur ist und eine Formgebung hat, die die vorgeformte Form definiert.

10. Verfahren zum Betreiben einer Pick-and-Place-Greifervorrichtung (100, 200) zum Aufgreifen und Neu-Positionieren eines verformbaren Nahrungsmittelobjekts, das von einer Auflagefläche getragen wird, wobei die Pick-and-Place-Greifervorrichtung Folgendes umfasst:
• ein Paar Backen (101, 102, 201, 202), die dafür eingerichtet sind, sich durch ein erstes Bewegungsmittel (212) von einer offenen Position in eine geschlossene Position, und umgekehrt, zu bewegen, wobei die Backen derart konzipiert sind, dass die Backen in der geschlossenen Position einen Hohlraum zum Formen und Tragen des verformbaren Nahrungsmittelobjekts definieren, wobei der Hohlraum eine Seitenwand und einen Boden umfasst, und
• eine Rahmenstruktur (103, 203), die zwischen den Backen (101, 102, 201, 202) angeordnet ist und die einen äußeren Rahmen (232) und einen oberen Rahmen (233) umfasst, wobei der äußere Rahmen (232) im Wesentlichen der Form der Seitenwand des Hohlraums folgt,
wobei das Verfahren Folgendes umfasst:
• Aufgreifen des verformbaren Objekts (1001), wobei das Aufgreifen Folgendes umfasst:
∘ Vorschieben des Paars Backen (1003) in Richtung des verformbaren Objekts und Bewegen des Paars Backen von der offenen Position in Richtung der geschlossenen Position,
∘ Bewegen der Rahmenstruktur (1004) und/oder des Paars Backen relativ aufeinander zu, derart, dass der äußere Rahmen auf das verformbare Nahrungsmittelobjekt einen Druck ausübt, was bewirkt, dass das verformbare Nahrungsmittelobjekt wenigstens teilweise in die Rahmenstruktur hinein zusammengedrückt wird, wo es in einer kompakten vorgeformten Form gehalten wird,
• Freigeben des verformbaren Nahrungsmittelobjekts von den Backen (1002), wobei das Freigeben Folgendes umfasst:
∘ Bewegen der Backen von der geschlossenen Position (1005) in die offene Position, wobei die Rahmenstruktur das verformbare Nahrungsmittelobjekt in der kompakten vorgeformten Form erhält, und anschließend
∘ Bewegen der Rahmenstruktur nach unten zu einer Stoppposition (1006), derart, dass das verformbare Nahrungsmittelobjekt in der kompakten vorgeformten Form an der Neupositionierungsposition freigegeben wird,
wobei die Formgebung des äußeren Rahmens (232) der inneren Formgebung der Backen (201, 202) entspricht, wenn diese sich in der geschlossenen Position befinden, derart, dass der äußere Rahmen (232) an den Seitenwänden der Backen entlanggleitet/diese berührt.

11. Verfahren nach Anspruch 10, wobei das Paar Backen (101, 102, 201, 202) jeweils einen Bodenabschnitt (230) und einen Seitenabschnitt (231) umfasst,
wobei in der geschlossenen Position die Bodenabschnitte den Boden des Hohlraums definieren und die Seitenabschnitte die Seitenwand des Hohlraums definieren und derart konzipiert sind, dass in der geschlossenen Position ein Ende des Hohlraums eine Öffnung umfasst, wobei das Verfahren das Steuern der Ausrichtung der Greifervorrichtung umfasst, wenn das verformbare Nahrungsmittelobjekt aufgegriffen wird, derart, dass ein Endabschnitt des verformbaren Nahrungsmittelobjekts sich an der Öffnungsseite der Greifervorrichtung befindet, um es dadurch dem Endabschnitt zu gestatten, frei aus der Öffnung herauszuhängen.

12. Verfahren nach Anspruch 10 oder 11, wobei der Schritt zum Freigeben des verformbaren Nahrungsmittelobjekts außerdem das derartige Positionieren der Greifervorrichtung (100, 200) umfasst, dass die Stoppposition sich nahe an der Auflagefläche befindet.

13. Verfahren nach einem der Ansprüche 10 bis 12, wobei die Backen (101, 102, 201, 202) derart konzipiert sind, dass in der geschlossenen Position wenigstens ein Ende der Backen und somit des Hohlraums dafür eingerichtet ist, einen Endteil des verformbaren Nahrungsmittelobjekts aufzunehmen, derart, dass der Endteil frei aus der Öffnung heraushängt, wobei das Verfahren Folgendes umfasst:
• Bewegen der Greifervorrichtung in Richtung einer Neupositionierungsposition,
• während der Bewegung oder anschließend an die Bewegung, Anwenden wenigstens teilweise einer horizontalen Bewegung, derart, dass der frei hängende Endteil unter die Greifervorrichtung und somit unter das verformbare Nahrungsmittelobjekt gefaltet wird, und
• Freigeben des Verformbaren an der Neupositionierung, derart, dass der Endteil an der Neupositionierungsposition unter den verbleibenden Teil des verformbaren Nahrungsmittelobjekts gefaltet wird.

14. Verfahren nach einem der Ansprüche 10 bis 13, wobei das verformbare Nahrungsmittelprodukt Geflügelfilet/Brust ist und wobei das Paar Backen (101, 102, 201, 202) derart konzipiert ist, dass der Hohlraum asymmetrisch ist und im Wesentlichen der Form des Geflügelfilets/der Brust folgt, derart, dass wenn das Geflügelfilet/die Brust in eine Schale hinein freigegeben wird, die kompakte und vorgeformte Form in der Schale erhalten bleibt.

15. Verfahren nach einem der Ansprüche 10 bis 13, wobei das verformbare Nahrungsmittelprodukt eine symmetrische Form hat und wobei das Paar Backen (101, 102, 201, 202) derart konzipiert ist, dass der Hohlraum symmetrisch ist und im Wesentlichen der Form des verformbaren symmetrischen Nahrungsmittelprodukts folgt, derart, dass wenn das verformbare symmetrische Nahrungsmittelprodukt in eine Schale hinein freigegeben wird, die kompakte und vorgeformte Form in der Schale erhalten bleibt.

## Revendications

1. Dispositif de préhension preneur-placeur (100, 200) pour saisir et repositionner un article alimentaire déformable (105) porté par une surface de support (104), comprenant :
- une paire de mâchoires (101, 102, 201, 202) configurées pour être déplacées par un premier moyen de déplacement (212) d'une position ouverte à une position fermée, et vice versa,
dans lequel le dispositif de préhension preneur-placeur comprend en outre :
- une structure de cadre (103, 203) agencée entre les mâchoires (101, 102, 201, 202) comprenant un cadre extérieur (232) et un cadre supérieur (233),
dans lequel les mâchoires sont conçues de telle sorte que, dans la position fermée, les mâchoires définissent une cavité pour mettre en forme et porter l'article alimentaire déformable, où la cavité comprend une paroi latérale et un fond, dans lequel, après la saisie de l'article alimentaire déformable par les mâchoires, la structure de cadre et/ou la paire de mâchoires sont configurées pour se déplacer l'une vers l'autre, de telle sorte que le cadre extérieur apporte une pression sur l'article alimentaire déformable amenant l'article alimentaire déformable à être au moins partiellement comprimé dans la structure de cadre où il est maintenu dans une forme préformée compacte, dans lequel ledit dispositif de préhension preneur-placeur (100, 200) est configuré pour déplacer les mâchoires de la position fermée à la position ouverte alors que la structure de cadre conserve l'article alimentaire déformable dans la forme préformée compacte lors de la libération de l'article alimentaire déformable, **caractérisé en ce que**
ledit dispositif de préhension preneur-placeur (100, 200) est configuré pour déplacer ensuite la structure de cadre vers le bas jusqu'à une position d'arrêt entraînant une libération de l'article alimentaire déformable dans la forme préformée compacte dans la position de repositionnement, où le cadre extérieur (232) suit essentiellement la forme de la paroi latérale de la cavité, et dans lequel la géométrie du cadre extérieur (232) correspond à la géométrie intérieure des mâchoires (201, 202) quand elles sont dans la position fermée de telle sorte que le cadre extérieur (232) fait glisser/touche les parois latérales des mâchoires.

2. Dispositif de préhension preneur-placeur selon la revendication 1, dans lequel la paire de mâchoires (101, 102, 201, 202) comprend une portion fond (230) et une portion latérale (231) où, dans la position fermée, les portions fonds définissent le fond de la cavité et les portions latérales définissent la paroi latérale de la cavité.

3. Dispositif de préhension preneur-placeur selon la revendication 1 ou 2, dans lequel la structure de cadre (103, 203) est configurée pour se déplacer vers le bas par un deuxième moyen de déplacement vers l'article alimentaire déformable de telle sorte que le cadre extérieur (232) se déplace entre la paroi latérale et l'article alimentaire déformable après la saisie de l'article alimentaire déformable par les mâchoires.

4. Dispositif de préhension preneur-placeur selon l'une quelconque des revendications précédentes, dans lequel la structure de cadre (103, 203) et/ou la paire de mâchoires (101, 102, 201, 202) sont reliées à un système de ressort (1101) configuré pour être au moins partiellement dans un état comprimé de manière à conserver une pression sur l'article alimentaire déformable, le déplacement suivant de la structure de cadre vers le bas jusqu'à la position d'arrêt étant provoqué par une libération du système de ressort depuis son état au moins partiellement dans l'état comprimé.

5. Dispositif de préhension preneur-placeur selon l'une quelconque des revendications précédentes, dans lequel la paire de mâchoires (101, 102, 201, 202) sont conçues de telle sorte que dans la position fermée une extrémité de la cavité comprend une ouverture configurée pour recevoir une portion queue de l'article alimentaire déformable de telle sorte que la portion queue devient librement suspendue à l'ouverture.

6. Dispositif de préhension preneur-placeur selon la revendication 5, dans lequel la structure de cadre (103, 203) comprend une structure s'étendant vers le bas positionnée dans une extrémité de la structure de cadre configurée pour pénétrer à travers l'ouverture et sous le fond de la cavité de manière à pousser la portion queue du produit déformable à travers l'ouverture lors du déplacement de la structure de cadre vers le bas par le deuxième moyen de déplacement vers l'article alimentaire déformable.

7. Dispositif de préhension preneur-placeur selon l'une quelconque des revendications 1 à 4, dans lequel la paire de mâchoires (101, 102, 201, 202) sont conçues de telle sorte que la cavité est symétrique par rapport à un axe central s'étendant perpendiculairement à un axe s'étendant entre les ouvertures au niveau des extrémités opposées, et où la paire de mâchoires sont conçues de telle sorte que dans la position fermée les deux extrémités de la cavité comprennent une ouverture configurée pour recevoir une portion queue de l'article alimentaire déformable de telle sorte que la portion queue devient librement suspendue à l'ouverture.

8. Dispositif de préhension preneur-placeur selon la revendication 7, dans lequel la structure de cadre (103, 203) comprend des structures s'étendant vers le bas (210) positionnées au niveau d'extrémités opposées de la structure de cadre configurées pour pénétrer à travers les ouvertures et sous le fond de la cavité de manière à pousser la portion queue du produit déformable à travers l'une des ouvertures lors du déplacement de la structure de cadre vers le bas par le deuxième moyen de déplacement vers l'article alimentaire déformable.

9. Dispositif de préhension preneur-placeur selon l'une quelconque des revendications précédentes, dans lequel la structure de cadre (103, 203) comprend de multiples ouvertures et/ou est une structure de type treillis et a une géométrie définissant la forme préformée.

10. Procédé de fonctionnement d'un dispositif de préhension preneur-placeur (100, 200) pour saisir et repositionner un article alimentaire déformable porté par une surface de support, le dispositif de préhension preneur-placeur comprenant :
- une paire de mâchoires (101, 102, 201, 202) configurées pour être déplacées par un premier moyen de déplacement (212) d'une position ouverte à une position fermée, et vice versa, où les mâchoires sont conçues de telle sorte que, dans la position fermée, les mâchoires définissent une cavité pour mettre en forme et porter l'article alimentaire déformable, où la cavité comprend une paroi latérale et un fond, et
- une structure de cadre (103, 203) agencée entre les mâchoires (101, 102, 201, 202) comprenant un cadre extérieur (232) et un cadre supérieur (233) où le cadre extérieur (232) suit essentiellement la forme de la paroi latérale de la cavité,
dans lequel le procédé comprend :
- la saisie de l'article déformable (1001), où la saisie comprend :
-- l'avancement de la paire de mâchoires (1003) vers l'article déformable et le déplacement de la paire de mâchoires de la position ouverte vers la position fermée,
-- le déplacement de la structure de cadre (1004) et/ou de la paire de mâchoires l'une vers l'autre de telle sorte que le cadre extérieur apporte une pression sur l'article alimentaire déformable amenant l'article alimentaire déformable à être au moins partiellement comprimé dans la structure de cadre où il est maintenu dans une forme préformée compacte,
- la libération de l'article alimentaire déformable depuis les mâchoires (1002), où la libération comprend :
-- le déplacement des mâchoires de la position fermée (1005) à la position ouverte alors que la structure de cadre conserve l'article alimentaire déformable dans la forme préformée compacte, et ensuite
-- le déplacement de la structure de cadre vers le bas jusqu'à une position d'arrêt (1006) de telle sorte que l'article alimentaire déformable devient libéré dans la forme préformée compacte dans la position de repositionnement,
dans lequel la géométrie du cadre extérieur (232) correspond à la géométrie intérieure des mâchoires (201, 202) quand elles sont dans la position fermée de telle sorte que le cadre extérieur (232) fait glisser/touche les parois latérales des mâchoires.

11. Procédé selon la revendication 10, dans lequel la paire de mâchoires (101, 102, 201, 202) comprennent une portion fond (230) et une portion latérale (231) où, dans la position fermée, les portions fonds définissent le fond de la cavité et les portions latérales définissent la paroi latérale de la cavité et sont conçues de telle sorte que, dans la position fermée, une extrémité de la cavité comprend une ouverture, où le procédé comprend la commande de l'orientation du dispositif de préhension, lors de la saisie de l'article alimentaire déformable, de telle sorte qu'une portion queue de l'article alimentaire déformable se situe au niveau du côté ouvert du dispositif de préhension de manière à permettre à la portion queue d'être librement suspendue à l'ouverture.

12. Procédé selon la revendication 10 ou 11, dans lequel l'étape de libération de l'article alimentaire déformable comprend en outre le positionnement du dispositif de préhension (100, 200) de telle sorte que la position d'arrêt est à proximité de la surface de support.

13. Procédé selon l'une quelconque des revendications 10-12, dans lequel les mâchoires (101, 102, 201, 202) sont conçues de telle sorte que, dans la position fermée, au moins une extrémité des mâchoires et ainsi de la cavité est adaptée pour recevoir une partie de queue des articles alimentaires déformables de telle sorte que la partie de queue est librement suspendue à l'ouverture, le procédé comprenant :
- le déplacement du dispositif de préhension vers une position de repositionnement,
- pendant le déplacement, ou à la suite du déplacement, l'application au moins partiellement d'un déplacement horizontal de telle sorte que la partie de queue librement suspendue devient pliée sous le dispositif de préhension et ainsi sous l'article alimentaire déformable, et
- la libération de l'article déformable dans le repositionnement de telle sorte que la partie de queue est pliée sous la partie restante de l'article alimentaire déformable dans la position de repositionnement.

14. Procédé selon l'une quelconque des revendications 10-13, dans lequel le produit alimentaire déformable est du filet/de la poitrine de volaille, et où la paire de mâchoires (101, 102, 201, 202) sont conçues de telle sorte que la cavité est asymétrique et suit sensiblement la forme du filet/de la poitrine de volaille de telle sorte que lors de la libération du filet/de la poitrine de volaille dans un bac la forme préformée et compacte dans le plateau sera conservée.

15. Procédé selon l'une quelconque des revendications 10-13, dans lequel le produit alimentaire déformable a une forme symétrique, et où la paire de mâchoires (101, 102, 201, 202) sont conçues de telle sorte que la cavité est symétrique et suit sensiblement la forme du produit alimentaire déformable de telle sorte que, lors de la libération du produit alimentaire déformable dans un bac, la forme préformée et compacte dans le bas sera conservée.
